**Europäisches Patentamt**

**European Patent Office**

**Office européen des brevets**

(19)

(11) Veröffentlichungsnummer: **0 125 503**
A2

(12) # EUROPÄISCHE PATENTANMELDUNG

(21) Anmeldenummer: **84104154.4**

(22) Anmeldetag: **24.12.81**

(51) Int. Cl.³: **B 27 B 5/16**

(30) Priorität: **24.12.80 AT 6318/80**

(43) Veröffentlichungstag der Anmeldung:
**21.11.84 Patentblatt 84/47**

(84) Benannte Vertragsstaaten:
**CH DE FR GB IT LI NL**

(60) Veröffentlichungsnummer der früheren
Anmeldung nach Art. 76 EPÜ: **0 054 978**

(71) Anmelder: **Janner, Ewald**
**Bildsteiner Strasse 65**
**A-6858 Schwarzach(AT)**

(72) Erfinder: **Janner, Ewald**
**Bildsteiner Strasse 65**
**A-6858 Schwarzach(AT)**

(74) Vertreter: **Rottmann, Maximilian R.**
**Hug Interlizenz AG Alte Zürcherstrasse 49**
**CH-8903 Birmensdorf/ZH(CH)**

(54) **Sägeeinrichtung.**

(57) Die Sägeeinrichtung umfasst einen rechteckigen Arbeitstisch (1), ein Sägeaggregat (2) mit einem Sägeblatt (3), ein den Arbeitstisch (1) tragendes Maschinengestell (4), ein feststehendes Grundgestell (5) und eine Anschlagleiste (6). Der Arbeitstisch (1) bzw. das Maschinengestell (4) ist zusammen mit dem Sägeaggregat (2) um eine vertikale Achse (7) gegenüber dem feststehenden Grundgestell (5) verschwenkbar, und das Sägeaggregat (2) ist gegenüber dem Arbeitstisch (1) höhenverstellbar und in horizontaler Richtung verschiebbar im Maschinengestell (4) gelagert. Die Anschlagleiste (6) hingegen ist direkt über entsprechende Tragschienen (8 und 9) mit dem Grundgestell (5) verbunden. Um insbesondere beim Quertrennen von Werkstücken eine entsprechende Breite zur Verfügung zu haben, ist vorgesehen, dass die vertikale Drehachse (7), bezogen auf die Längserstreckung des Arbeitstisches (1), aussermittig gegen die Anschlagleiste (6) hin versetzt ist. Diese vertikale Drehachse führt jedoch durch die Mitte des Grundgestelles (5). Um eine ausreichend stabile Abstützung zwischen dem Maschinengestell (4) und dem Grundgestell (5) zu gewährleisten, sind koaxial zur vertikalen Drehachse (7) aneinander anliegende Abstützringe (10 und 11) vorgesehen. Diese können zusätzlich auch zu einer genauen Winkeleinstellung herangezogen werden und sind zu diesem Zwecke mit einer Gradeinteilung und entsprechenden Bezugsmarkierungen versehen.

Fig. 3

# S Ä G E E I N R I C H T U N G

--------------------------------

Die vorliegende Erfindung bezieht sich auf eine Sägeeinrichtung mit mindestens einer als Arbeitstisch ausgebildeten Werkstückauflage und einem Sägeaggregat, welches im Sinn einer Zustellbewegung in Höhenrichtung sowie im Sinn einer Vorschubbewegung wenigstens annähernd parallel bezüglich des Arbeitstisches beweglich gelagert und mit einem Betätigungsglied für die Zustell- und Vorschubbewegung verbunden ist, und welches bezüglich eines Grundgestells um eine Vertikalachse verdrehbar und feststellbar ist.

Eine Sägeeinrichtung mit in Höhen- bzw. Zustellrichtung sowie in Horizontal- bzw. Vorschubrichtung beweglichem, also gegebenenfalls auch einstellbarem Sägeaggregat ist aus der DE-PS 960 382 bekannt. Eine ähnliche Sägeeinrichtung geht aus der CH-PS 300 371 hervor, welche ein doppeltes, d.h. mit zwei gegenläufig rotierenden Sägeblättern versehenes Sägeaggregat umfasst. Dieses ist auf einer Wippe angeordnet, die auf einem hin- und herbewegbaren Laufwagen gelagert ist, wobei eine Bewegung im Sinn einer Zustellung in Höhenrichtung durch Betätigung der Wippe und eine Bewegung im Sinne eines Vorschubs durch Betätigung des Laufwagens gegeben ist.

Obzwar bei diesen bekannten Sägeeinrichtungen keine Verschwenkbarkeit des Sägeaggregates um eine vertikale Achse offenbart ist, ist doch diese Massnahme allgemein bei ähnlichen Sägeeinrichtungen verbreitet. Eine simple Übertragung dieses Verschwenkungsprinzips auf eine gattungsgemässe Sägeeinrichtung stösst jedoch auf Schwierigkeiten, da zwangsläufig der Weg der Vorschubbewegung des Sägeaggregates bei dessen Verschwenkung beschränkt bzw. durch mit dem Arbeitstisch zusammenwirkende Anschlagorgane behindert wird.

Es ist die Aufgabe der vorliegenden Erfindung, eine Sägeeinrichtung der eingangs genannten Art so auszubilden, dass der vorstehend geschilderte Nachteil nicht mehr auftritt und somit die Möglichkeit zu schaffen, die Länge der insgesamt erzielbaren Vorschubbewegung und gleichzeitig die entsprechende Längserstreckung des Arbeitstisches vergleichsweise gross zu wählen. Im weiteren soll mit der erfindungsgemäss vorgeschlagenen Lösung erreicht werden, dass eine Schwenkeinstellung des Sägeaggregates um die Vertikalachse für entsprechende Schrägschnitte ohne Kollision mit äusseren Tragelementen des Grundgestelles, bzw. mit den daran befestigten Auflage- oder Anschlagelementen möglich ist.

Die erfindungsgemässe Aufgabe wird mit einer Sägeeinrichtung der eingangs genannten Art dadurch gelöst, dass die Vertikalachse des Arbeitstisches, bezogen auf die Längserstreckung desselben, parallel zur Vorschubbewegung des Sägeaggregates aussermittig in Richtung entgegen der Vorschubbewegung des Sägeaggregates versetzt angeordnet ist, und dass eine in bezug auf das Grundgestell sowohl in Höhenrichtung als auch in Horizontalrichtung verstellbare Werkstück-Anschlagleiste vorgesehen ist.

Weiterbildungen und bevorzugte Ausführungsformen des Erfindungsgegenstandes sind in den abhängigen Ansprüchen 2 bis 7 umschrieben.

Im folgenden werden Ausführungsbeispiele der erfindungsgemässen
Sägeeinrichtung, unter Bezugnahme auf die beiliegenden Zeichnungen, näher erläutert. Im einzelnen zeigen:

Fig. 1        eine schematische Ansicht einer Sägeeinrichtung von
              oben,

Fig. 2        eine entsprechende Ansicht, jedoch mit um 90 grad verdrehten Arbeitstisch,

Fig. 3        eine Seitenansicht der Sägeeinrichtung,

Fig. 4        eine Ansicht der Sägeeinrichtung von oben,

Fig. 5        eine Ansicht der Sägeeinrichtung von hinten,

Fig. 6+7      Seitenansichten einer Sägeeinrichtung mit innenligendem, dreheinstellbarem Maschinengestell sowie mit
              aussenliegendem Grundgestell einschliesslich daran
              befestigter Anschlagleiste, und zwar in angehobener
              und in abgesenkter Arbeitsstellung,

Fig. 8        eine Ansicht der Sägeeinrichtung gemäss Figuren 6 und 7
              von vorne mit in Grundstellung abgesenkter Anschlagleiste, und

Fig. 9      eine Draufsicht auf die Sägeeinrichtung gemäss Figuren
            6 bis 8 mit Andeutungen verschiedener Schwenkeinstellungen des Arbeitstisches.


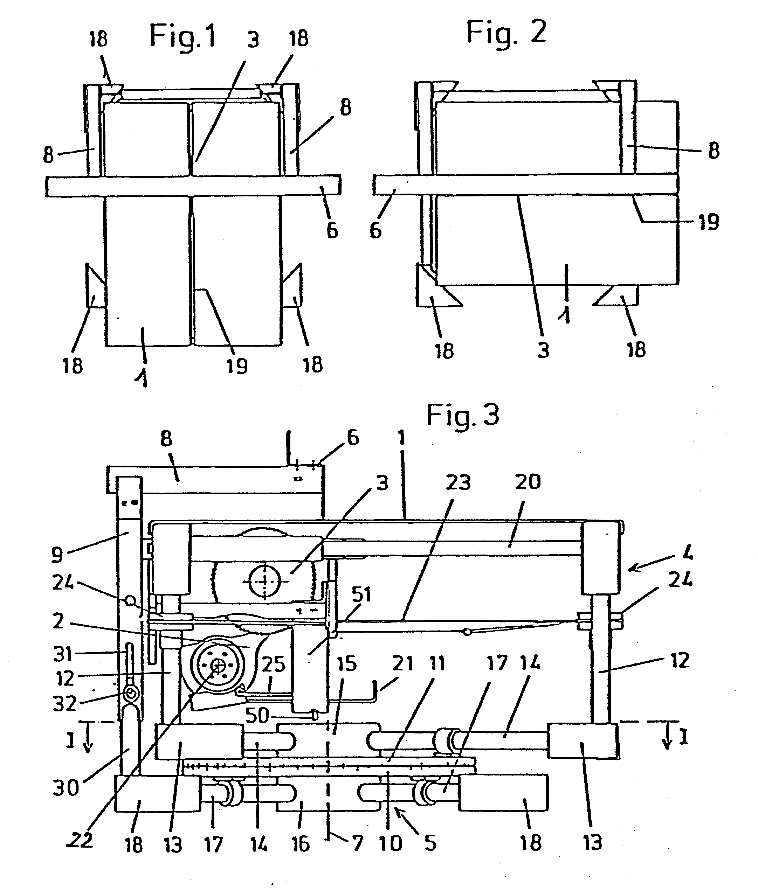

Die in den Figuren 1 bis 5 dargestellte Sägeeinrichtung umfasst
als wesentliche Elemente einen Arbeitstisch 1, ein Sägeaggregat 2
mit einem Sägeblatt 3, ein den Arbeitstisch 1 tragendes Maschinengestell 4, ein feststehendes Grundgestell 5 und eine Anschlagleiste 6. Der Arbeitstisch 1 bzw. das den Arbeitstisch tragende
Maschinengestell 4 ist zusammen mit dem Sägeaggregat 2 um eine
vertikale Achse 7 (Figur 3) gegenüber dem feststehenden Grundgestell 5 verschwenkbar und in einer gewünschten Verschwenklage
feststellbar. Das Sägeaggregat 2 bzw. das ihm zugeordnete Sägeblatt 3 ist gegenüber dem Arbeitstisch 1 höhenverstellbar und in
horizontaler Richtung verschiebbar im Maschinengestell 4 gelagert.
Die Anschlagleiste 6 hingegen ist direkt über entsprechende Tragschienen 8 und 9 mit dem Grundgestell 5 verbunden.


Wie insbesondere aus den Figuren 1 und 2 ersichtlich ist, besitzt
der Arbeitstisch 1 rechteckige Gestalt. Das Grundgestell 5 ist
zweckmässigerweise, in Draufsicht, quadratisch ausgebildet, wobei
es sich aus Gründen der Standfestigkeit als vorteilhaft erwiesen
hat, die Seitenlänge des Grundgestelles 5 grösser auszubilden als
die Breite, jedoch kleiner als die Länge des Arbeitstisches 1.


Um insbesondere beim Quertrennen von Werkstücken eine entsprechende Breite zur Verfügung zu haben, ist vorgesehen, dass die vertikale Drehachse 7, bezogen auf die Längserstreckung des Arbeitstisches 1, aussermittig gegen die Anschlagleiste 6 hin versetzt ist.
Diese vertikale Drehachse führt jedoch durch die Mitte des Grundgestelles 5. Um eine ausreichend stabile Abstützung zwischen dem
Maschinengestell 4 und dem Grundgestell 5 zu gewährleisten, sind
koaxial zur vertikalen Drehachse 7 aneinander anliegende Abstützringe 10 und 11 vorgesehen. Diese können zusätzlich auch zu einer
genauen Winkeleinstellung herangezogen werden und sind zu diesem
Zwecke mit einer Gradeinteilung und entsprechenden Bezugsmarkierungen versehen.

Das den Arbeitstisch 1 tragende Maschinengestell 4 besteht im
wesentlichen aus vier Tragsäulen 12, welche an den Ecken des
Maschinengestells 4 angeordnet sind. Über entsprechende Verbindungsteile 13 und strahlenförmig von der Drehachse 7 nach aussen
geführte Streben 14 sind die Tragsäulen 12 mit einem koaxial zur
Achse 7 angeordneten Lagerkörper 15 miteinander verbunden.

Das Grundgestell 5 umfasst zweckmässigerweise ebenfalls einen
koaxial zur Achse 7 angeordneten Lagerkörper 16 sowie strahlenförmig nach aussen geführte Streben 17, welche in Standfüssen 18
enden.

Insbesondere aus der Figur 3 ist ersichtlich, dass die Abstützringe 10 und 11 über die Lagerkörper 15 und 16 an den strahlenförmig nach aussen geführten Streben 14 bzw. 17 befestigt sind.
Dadurch wird sowohl dem Grundgestell 5 als auch dem den Arbeitstisch tragenden Maschinengestell 4 eine ausserordentlich gute
Stabilität verliehen.

Der Arbeitstisch 1 weist entlang dessen Längsmittellinie einen Schlitz 19 zum Durchtritt des Sägeblattes 3 auf. Durch die Anordnung dieses Sägeschlitzes entlang der Längsmittellinie ergibt sich eine gleich grosse Auflage für die Werkstücke beidseitig des Sägeblattes, was insbesondere beim Quertrennen von länglichen Werkstücken vorteilhaft ist, und ausserdem ist nach beiden Seiten hin entsprechend genügend Platz vorhanden, um auch breitere Werkstücke zu besäumen bzw. in Längsrichtung zu durchtrennen.

Das Sägeaggregat ist an horizontalen Führungsschienen 20 innerhalb des Maschinengestelles 4 verschiebbar gelagert. Die Höhenverstellung des Sägeblattes 3 bzw. des gesamten Sägeaggregates 2 wie auch das Verschieben des letzteren in Schnittrichtung kann auf verschiedene Art und Weise erfolgen, und zwar sowohl von Hand als auch maschinell. Beim gezeigten Ausführungsbeispiel ist zur manuellen Verstellung ein Zughebel 21 vorhanden, welcher mit Abstand unterhalb einer horizontal verlaufenden Drehachse 22 des Sägeaggregates 2 angreift. Beim Ziehen am Zughebel 21 wird das Sägeaggregat 2 um die Achse 22 nach oben verschwenkt, so dass das Sägeblatt 3 über die Oberfläche des Arbeitstisches 1 hinausragt. Beim Weiterziehen wird das Sägeaggregat 2 in Schnittrichtung innerhalb des Maschinengestells 4 verschoben, so dass der Schnitt durchgeführt wird.

Bei der in den Zeichnungen veranschaulichten, beispielshaften Konstruktion ist ein Federzug 23 vorgesehen, welcher über Umlenkrollen 24 geführt ist. Beim Vorziehen des Sägeaggregates 2 wird der Federzug 23 angespannt, so dass nach Loslassen des Zughebels 21 das Sägeaggregat 2 um die Achse 22 in die Ruhestellung zurückschwenkt und danach das gesamte Sägeaggregat in die Ausgangslage
zurückgezogen wird. Mittels einer Feststellschraube 50 kann der
Zughebel 21 in einer bestimmten Stellung arretiert werden, so dass
das Sägeblatt 3 in einer gewünschten Ausfahrhöhe fixiert ist. Um
eine Möglichkeit zur Anzeige der Ausfahrhöhe des Sägeblattes 3 zu
schaffen, ist ein Anzeigestab 25 vorgesehen, welcher gegenüber
einem feststehenden Teil 51 zusammen mit dem Sägeaggregat 2 verschwenkbar ist.

Um Gehrungsschnitte oder sonstige Schrägschnitte durchführen zu
können, ist das Sägeaggregat zusätzlich um eine parallel zu den
Führungsschienen 20 verlaufende, horizontale Achse verschwenkbar.
Beim gezeigten Ausführungsbeispiel ist das gesamte Sägeaggregat 2
an zwei im Abstand voneinander angeordneten Flanschen 26 und 27
befestigt, in welchen bogenförmige Schlitze 28 vorgesehen sind,
die von Befestigungsschrauben 29 des Sägeaggregates 2 durchgriffen
werden. Nach Lösen dieser Befestigungsschrauben 29 kann eine entsprechende Winkelverstellung vorgenommen werden, um danach das
Sägeaggregat 2 durch neuerliches Anziehen der Schrauben 29 in
dieser Stellung zu fixieren.

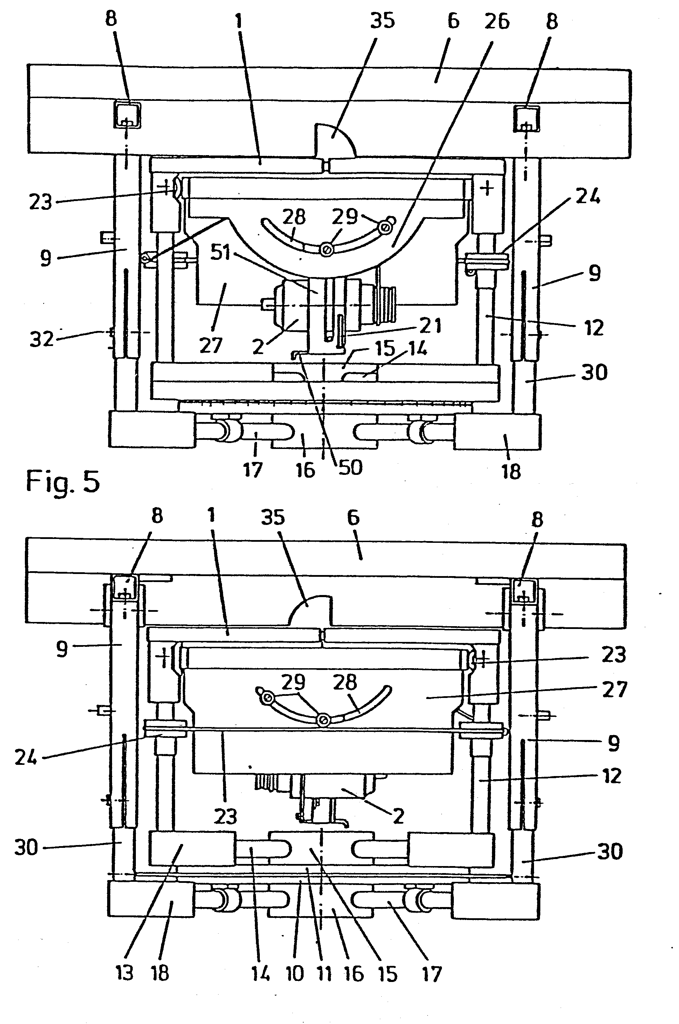

Die Anschlagleiste 6 ist direkt mit dem Grundgestell 5 verbunden
und zwar über Tragschienen 8 und 9. Die Tragschienen 9 sind an
direkt mit dem Grundgestell 5 verbundenen Trägern 30 höhenverstellbar gelagert, wobei zu diesem Zweck beim gezeigten Ausführungsbeispiel Längsschlitze 31 vorgesehen sind, durch welche Befestigunsschrauben 32 hindurchtreten. An den Tragschienen 9 sind dann wiederum die Tragschienen 8 in horizontaler Richtung verstellbar befestigt, so dass dadurch die Anschlagleiste 6 gemäss dem erforderlichen Abstand zu dem Sägeblatt 3 verstellt werden kann. Die Anschlagleiste 6 überragt die Tragschienen 8 in Richtung zur ArbeitstischOberfläche hin, so dass ein relativ genauer Abschluss zum Arbeitstisch 1 hin erfolgen kann. Es ist dadurch möglich, den Anschlag auch für vergleichsweise dünne Werkstücke einzusetzen. Wie den Figuren 4 und 5 entnommen werden kann, weist die Anschlagleiste 6 einen Ausschnitt 35 zum Durchtritt des Sägeblattes 3 in Schnittrichtung auf.

Durch die besondere Konstruktion der Anschlagleiste 6 und der Tragschienen 8 und 9 besteht die Möglichkeit, dass die die Anschlagleiste 6 aufnehmenden Tragschienen 8 ausserhalb des Arbeitstisches 1 auf das Niveau der Oberfläche desselben absenkbar sind. Die Anschlagleiste 6 wird dann um 180 grad gewendet, so dass das Anschlagende über die obere Begrenzung der Tragschiene 8 vorsteht. Dadurch ist eine entsprechende Verlängerung des Arbeitstisches möglich, was sich insbesondere dann vorteilhaft auswirkt, wenn relativ breite Werkstücke in Längsrichtung getrennt werden sollen. Damit auch in diesem Fall eine genaue Einstellung der Anschlagleiste möglich ist, ist letztere mit einer entsprechenden Ausnehmung versehen, durch die die Tragschienen 8 hindurchführen. Die Anschlagleiste 6 ist also in Längsrichtung der Tragschiene 8 verstellbar und an diesen in der gewünschten Lage feststellbar, wobei diese Verstellbarkeit auch in der in Figur 3 dargestellten Lage der Anschlagleiste 6 gegeben ist.

Im Rahmen der Erfindung ist es auch möglich, die Träger 30 von denjenigen Standfüssen 18, in welche sie gemäss der zeichnerischen Darstellung eingesetzt sind, zu lösen und in andere Standfüsse 18 einzustecken; zu diesem Zwecke sind alle Standfüsse mit (nicht gezeigten) Bohrungen versehen.

Bei den beiden Ansichten gemäss Figur 1 und 2 ist die Anschlagleiste 6 in der jeweils äussersten Stellung gezeigt, wobei auch die Tragschienen 8 vollständig in Richtung zum Arbeitstisch hin ausgefahren sind. Es versteht sich, dass eine Verstellung entweder der Anschlagleiste 6 allein oder zusammen mit den Tragschienen 8 auf jeden gewünschten Abstand zum Schlitz 19 möglich ist. Gerade aus den Figuren 1 und 2 ist zu erkennen, dass durch die erfindungsgemässen Massnahmen lange Werkstücke bei jeder Bearbeitungsart in der gleichen Lage ausgerichtet sind, zumal ja die Anschlagleiste 6 mit dem stationären Grundgestell 5 verbunden ist und demnach stets identische Längsausrichtung aufweist. Durch eine einfache Verstellmöglichkeit des gesamten Arbeitstisches 1 bzw. des den Arbeitstisch tragenden Maschinengestells 4 kann für eine derartige Sägeeinrichtung eine Vielfalt von Einsatzmöglichkeiten geschaffen werden.

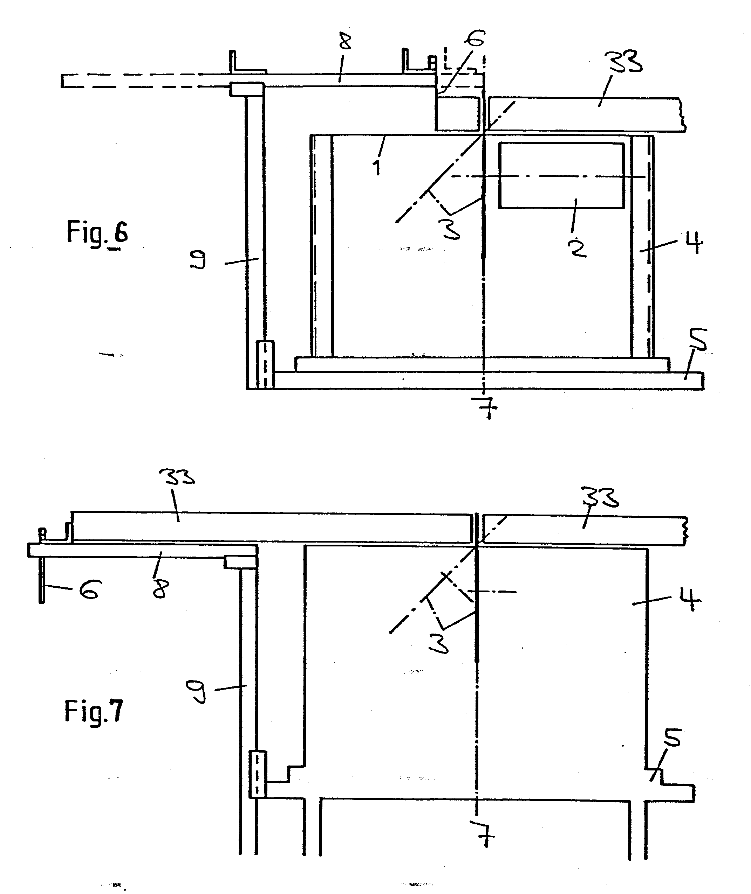

Aus den Figuren 6 bis 8, insbesondere aus der Figur 6, ist ersichtlich, wie das Sägeaggregat 2 mitsamt dem Maschinengestell 4 um die Vertikalachse 7 in bezug auf das Grundgestell 5 verschwenkbar ist. Letzteres trägt die Vertikalträger 9 für die Anschlagleiste 6, die ihrerseits über Horizontalträger 8 mit dem Vertikalträger 9 verbunden ist. Die Vertikalträger 9 sind in der angedeuteten

0125503

Weise bezüglich des Grundgestelles 5 höhenverschiebbar gelagert (siehe insbesondere Figuren 6 und 7), während die Horizontalträger 8 an den oberen Enden der Vertikalträger 9 horizontal verschiebbar gelagert sind. Damit lässt sich eine Vielzahl von Arbeitsstellungen für die Anschlagleiste 6 bei der Bearbeitung unterschiedlicher Werkstücke 33 erreichen, insbesondere auch eine nach hinten verlängerte Auflage für besonders weit ausgreifende Werkstücke 33 gemäss Figur 7.

Die Anschlagleiste 6 ist dazu mit ihren Horizontalträgern 8 in umgekehrter Lage in die Führungen der Vertikalträger 9 einsetzbar und mit entsprechenden Anschlagelementen beidseitig der Horizontalträger 8 versehen. Wie aus der Figur 6 ersichtlich ist, können die beidseitigen Anschlagelemente unterschiedlich Abmessungen besitzen, womit unterschiedlichen Werkstückdicken Rechnung getragen werden kann.

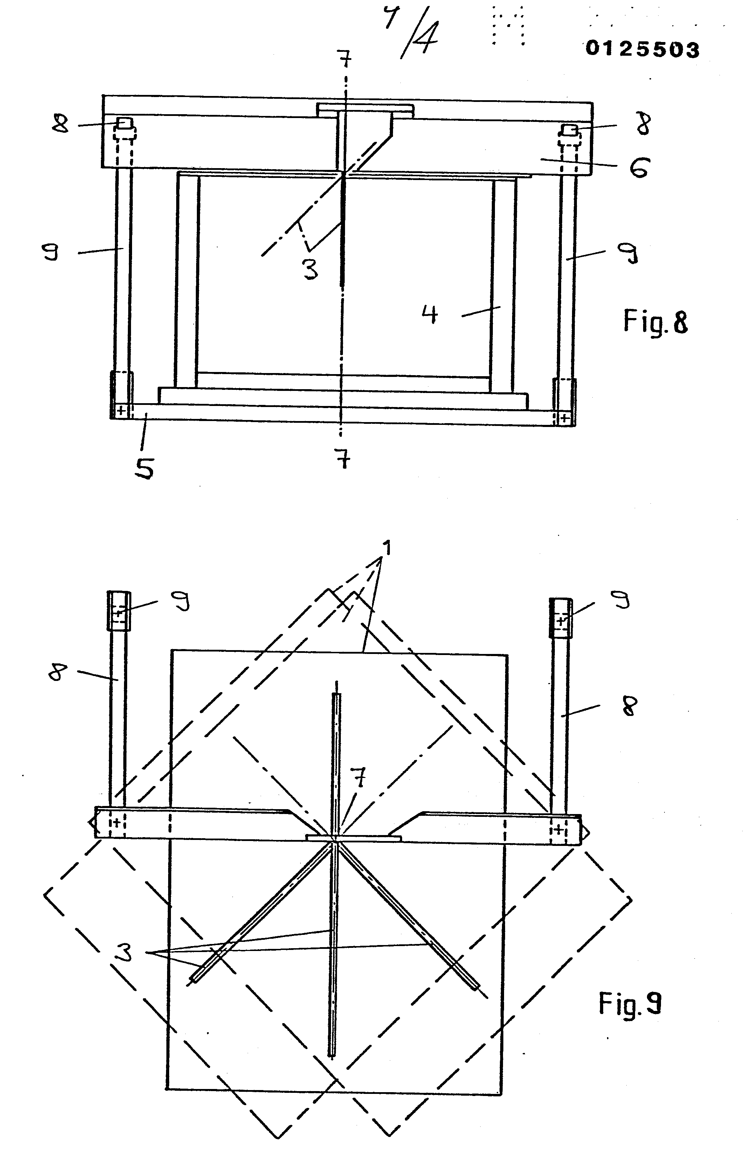

Die Anschlagleiste 6 lässt sich auf einfache Weise aus der abgesenkten Grundstellung gemäss Figuren 6 und 7 weiter anheben und damit gegebenenfalls auch auf unterschiedlichen Seiten des Sägeblattes 3 anordnen. Letzteres ist, wie in den Figuren 6 bis 8 schematisch angedeutet, in üblicher Weise um eine zur Blattebene parallele Horizontalachse schwenkbar gelagert, wozu eine entsprechende Gelenkanordnung in der Halterung des Sägeaggregates 2 vorgesehen ist (nicht dargestellt). Schliesslich veranschaulicht Figur 9 die Schwenkbarkeit des Arbeitstisches 1 zusammen mit dem Maschinengestell 4 ohne Behinderung durch die mit dem Grundgestell 5 verbundenen Vertikalträger 9.

PATENTANSPRÜCHE

--------------------------------

1. Sägeeinrichtung mit mindestens einer als Arbeitstisch ausgebildeten Werkstückauflage und einem Sägeaggregat, welches im Sinn einer Zustellbewegung in Höhenrichtung sowie im Sinn einer Vorschubbewegung wenigstens annähernd parallel bezüglich des Arbeitstisches beweglich gelagert und mit einem Betätigungsglied für die Zustell- und Vorschubbewegung verbunden ist, und welches bezüglich eines Grundgestells um eine Vertikalachse verdrehbar und feststellbar ist, dadurch gekennzeichnet, dass die Vertikalachse (7) des Arbeitstisches bezogen auf die Längserstreckung des desselben parallel zur Vorschubbewegung des Sägeaggregates (2) aussermittig in Richtung entgegen der Vorschubbewegung des Sägeaggregates versetzt angeordnet ist, und dass eine in bezug auf das Grundgestell (5) sowohl in Höhenrichtung als auch in Horizontalrichtung verstellbare Werkstück-Anschlagleiste (6) vorgesehen ist.

2. Sägeeinrichtung nach Anspruch 1, dadurch gekennzeichnet, dass der Arbeitstisch (1) in Draufsicht rechteckig ausgebildet ist und dass das Grundgestell (5), innerhalb dessen ein den Arbeitstisch (1) tragendes, um die Vertikalachse (7) verschwenkbares Maschinengestell (4) gelagert ist, in Draufsicht quadratische Gestalt besitzt, wobei dessen Seitenlänge grösser als die Breite und kleiner als die Länge des Arbeitstisches (1) ist.

3. Sägeeinrichtung nach Anspruch 1 oder 2, dadurch gekennzeichnet, dass die Vertikalachse (7) des Arbeitsstisches (1) durch die Mitte des Grundgestells (5) geführt ist.

4. Sägeeinrichtung nach einem der Ansprüche 1 bis 3, dadurch gekennzeichnet, dass sowohl an dem den Arbeitstisch (1) tragenden Maschinengestell (4) als auch am Grundgestell (5) koaxial zur Vertikalachse (7) angeordnete, aneinander anliegende Abstützringe (10, 11) vorgesehen sind.

5. Sägeeinrichtung nach Anspruch 1 oder einem der Ansprüche 2 bis 4, dadurch gekennzeichnet, dass die Anschlagleiste (6) an mindestens einem mit dem Grundgestell (5) verbundenen Träger (30) höhenverstellbar gelagert und mittels mindestens einer horizontalen Tragschiene (8) quer zu deren Längserstreckung verstellbar ausgebildet ist.

6. Sägeeinrichtung nach Anspruch 5, dadurch gekennzeichnet, dass die Tragschiene (8) der Anschlagleiste (6) ausserhalb des Arbeitstisches (1) auf dessen Niveau absenkbar ausgebildet ist.

7. Sägeeinrichtung nach Anspruch 5 oder 6, dadurch gekennzeichnet, dass die Anschlagleiste (6) quer zu deren Längserstreckung die Tragschiene (8) in Richtung zum Arbeitstisch (1) hin überragt.

0125503

Fig.1

Fig. 2

Fig. 3

Fig. 4

Fig. 5

0125503

Fig. 6

Fig. 7

0125503

Fig. 8

Fig. 9